# EUROPEAN PATENT SPECIFICATION

(11) **EP 4 312 555 B1**
(45) Date of publication and mention of the grant of the patent: **19.08.2026**
(21) Application number: 22719926.2
(22) Date of filing: 31.03.2022
(51) Int. Cl.: A01N 43/80, A01N 25/02, A01N 25/08, A01P 7/00

(54) **INSECT PEST BAIT COMPOSITION WITH ISOCYCLOSERAM AND METHOD FOR CONTROLLING INSECT PESTS**
KÖDERZUSAMMENSETZUNG FÜR INSEKTENSCHÄDLINGE MIT ISOCYCLOSERAM UND VERFAHREN ZUR BEKÄMPFUNG VON INSEKTENSCHÄDLINGEN
COMPOSITION D'APPÂT POUR INSECTES NUISIBLES AVEC ISOCYCLOSERAM ET PROCEDE DE LUTTE CONTRE LES INSECTES NUISIBLES

(30) Priority: 31.03.2021 EP 21166425
(43) Date of publication of application: 07.02.2024
(73) Proprietor: Syngenta Crop Protection AG, 4058 Basel (CH)
(72) Inventor: SKILLMAN, Stephen Wilson, 4058 Basel (CH); VALERIM DOS SANTOS, Leandro, 04730-300 Sao Paulo (BR); HOPPE, Mark, 4332 Stein (CH); FRANCA, Natalia, CEP 13140-000 São Paulo (BR)
(74) Representative: SYNGENTA IP
(86) International application number: PCT/EP2022/058721
(87) International publication number: WO 2022/207887

(56) References cited:
- WO-A1-2011/067272
- WO-A1-2016/166252
- WO-A1-2017/140563
- WO-A1-2018/234478
- WO-A1-2020/126649
- SPARKS THOMAS C ET AL: "Insecticides, biologics and nematicides: Updates to IRAC's mode of action classification - a tool for resistance management", PESTICIDE BIOCHEMISTRY AND PHYSIOLOGY, ACADEMIC PRESS, US, vol. 167, 5 May 2020 (2020-05-05), XP086173743, ISSN: 0048-3575, [retrieved on 20200505], DOI: 10.1016/J.PESTBP.2020.104587

## Description

The invention relates to baits for controlling insect pests and, in particular, to insect baits containing isoxazoline derivatives. The invention furthermore relates to the use of such insecticidal baits, to methods of preparing such baits, and to methods for controlling insects pests with such baits.

Various methods are known for controlling insect pests. Among these, food-based insect baits are an effective and selective method of insect pest control. Typically, an insect bait consists of a bait composition or matrix (often a grain or an animal or vegetable protein) that also may serve as a carrier, an insecticide and optionally additional components to increase attractiveness (such as oil, sugar or water, for example). For effective control, a bait must be palatable enough to compete with other food sources in the environment to cause the insect pests to ingest a lethal dose of the insecticide. In some cases, when an insect pest is not initially attracted to the base material, the bait may still be palatable enough for the insect to consume it.

Insecticide selection is an important factor in bait design. For example, if the bait contains an insecticide that is not palatable, is repellent, or acts too quickly against the target insects, such insects may react very sensitively, avoid the bait and/or continue to forage for other appropriate food sources. Such avoidance behavior will not only reduce effectiveness of the bait against target insects but may also induce behavioral resistance or aversion in the control of social and communal insect pests.

For example, leaf-cutting ants (genera Atta and Acromyrmex, family: Formicidae) are communal insect pests that exhibit an obligate mutualism with a fungus (Leucocoprinus gongylophorus, Lepiotaceae, Basidiomycota) for which they cut and collect live vegetative material. The ants bring fresh leaves, flowers and fruits to their colony nest, process this material by shredding it into small particles and incorporate it into the fungus culture. The fungus grows on this substrate and then is consumed by the worker ants, the brood and the queen as their exclusive food source. Leaf-cutting ants are very destructive pests in agriculture, horticulture, silviculture and range management. Control of leaf-cutting ant nests can be problematical as these nests often are primarily subterranean and can cover an extensive area.

Insecticidal baits can be presented to leaf-cutting colonies for ants to carry back to their nests. The ants must select the bait and bring it to the nest, an extra step between application and contact with the target fungus that is not required with non-bait treatments. As noted above, if the bait contains an insecticide that is not palatable, is repellent, or acts too quickly against the target insects, the ants can learn to reject material as being unsuitable for their mutualistic fungus. Thus, unless the leaf-cutting colony is killed by the first application of the bait, the ants can learn to stop collecting the bait, thereby rendering the control method ineffective.

There still exists the problem of providing bait compositions that are attractive to the target insect pest and which contain an insecticide that can be applied without being repellent or acting too quickly against the target insect. Moreover, there is a continued need for baits that provide satisfactory control of social or communal insect pests.

Certain isoxazoline derivatives with insecticidal properties are disclosed, for example, in WO2011/067272 and WO2020/126649. One specific isoxazoline with insecticidal properties is isocycloseram. WO2016/166252 describes methods of combatting insect pests using broflanilide or des-methyl-broflanilide.

It has now been found that insect baits which comprise isocycloseram as an insecticidal active substance are particularly suitable for controlling insect pests and insect populations including social or communal insect pests.

Therefore, the present invention provides an insect bait comprising an insecticidally effective amount of isocycloseram and a bait composition comprising an insect food attractant and/or an insect food flavorant. The bait composition according to the invention can be in the form of a solid, a liquid, a paste or a gel. In another aspect of the invention, a method is provided for controlling insects and/or insect populations with an insect bait according to the invention.

Isocycloseram is an insecticidal agrochemical with the following CAS number:2061933-85-3, and is represented by chemical formula (I):

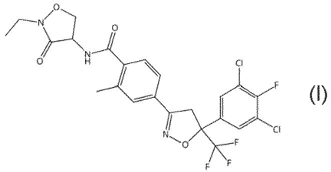

Isocycloseram can comprise the isomer (5S,4R) which is 4-[(5S)-5-(3,5-dichloro-4-fluoro-phenyl)-5-(trifluoromethyl)-4H-isoxazol-3-yl]-N-[(4R)-2-ethyl-3-oxo-isoxazolidin-4-yl]-2-methyl-benzamide (CAS no. 1309959-62-3), and optionally at least one of the isomers selected among isomer (5S,4S), isomer (5R,4R), isomer (5R,4S), and any combinations thereof. In the present invention, the isomer (5S,4S) is 4-[(5S)-5-(3,5-dichloro-4-fluoro-phenyl)-5-(trifluoromethyl)-4H-isoxazol-3-yl]-N-[(4S)-2-ethyl-3-oxo-isoxazolidin-4-yl]-2-methyl-benzamide; the isomer (5R,4R) is 4-[(5R)-5-(3,5-dichloro-4-fluoro-phenyl)-5-(trifluoromethyl)-4H-isoxazol-3-yl]-N-[(4R)-2-ethyl-3-oxo-isoxazolidin-4-yl]-2-methyl-benzamide; and the isomer (5R,4S) is 4-[(5R)-5-(3,5-dichloro-4-fluoro-phenyl)-5-(trifluoromethyl)-4H-isoxazol-3-yl]-N-[(4S)-2-ethyl-3-oxo-isoxazolidin-4-yl]-2-methyl-benzamide. When isocycloseram further comprises at least one of the isomers selected among isomer (5S,4S), isomer (5R,4R), isomer (5R,4S), and any combinations thereof, isocycloseram can comprise a molar proportion of the isomer (5S,4R) greater than 50%, e.g. at least 55%, 60%, 65%, 70%, 75%, 80%, 85%, 90%, 95%, 96%, 97%, 98% or 99%, over the total amount of the isomers (5S,4R), (5S,4S), (5R,4R) and (5R,4S).

In addition to an insecticidally effective amount of isocycloseram, the bait composition of the invention contains a bait material comprising an insect food attractant as defined in claim 1 and optionally an insect food flavorant.

Food attractants refer to constituents which can provide for the insects' feed uptake (such as a food preferred by the target insect pest) and/or to a material which can attract the target insects to the insect bait composition when the insect is in the locus or vicinity, or that can attract the insect over a distance (specific attractants); even if such food attractant material is not an insect food source, per se.

For example, leafcutter ants harvest both leaves and grasses including, for example, leaves of citrus or eucalyptus trees which are cut into smaller parts and made into a kind of pulp to cultivate fungal gardens that serve as a food source for ant larvae. In this regard, a citrus pulp contained in a bait can function as a food attractant for a leaf cutter ant even though citrus pulp is not used as a food per se.

Food flavorants (phagostimulants) refer to materials that stimulate insect feeding of the bait material once the insecticide bait it is encountered by the target insect pest. It is possible to employ mixtures of such constituents in the bait material. In some cases, a food attractant can also function as a food flavorant.

Suitable insect food attractants include one or more than one of a grain, a protein, a vegetable, a lipid, a plant extract, or a carbohydrate.

Suitable grains or grain legumes include, for example, wheat, barley, rye, oats, rice, sorghum, soybeans, corn, garbanzo, amaranth or potato. When a grain is used, it may be used in the form of a flour, grit, or grain. Flours or grits are prepared for use in the bait by milling of the grains or cereals to an appropriate size. Other examples include distiller's grain, starch, various bran materials such as wheat bran or rice bran, oatmeal, corn grits, corn chips, corn seeds, corn starch, various mixes such as corn-wheat mix, wheat seeds, whole wheat bread dough, defatted corn grits, brewer's malt, poultry mash, and the like. In addition, there may be mentioned cereal powder such as, for example, wheat powder, maize powder, rice powder, rice bran and the like, starches such as, for example, potato starch, corn starch and the like.

Proteins contained in, for example, meat, meat extract and milk powder, fish meal, fish extracts, or seafood, seafood extracts, insects, insect extracts or yeast, yeast extract, peanut butter, yeast lysates or soy protein hydrolysate. Other examples of proteins from natural sources are milk proteins (such as casein, sodium casein, calcium casein, lactalbumin, dried milk), plant protein (such as gluten, e.g. from wheat; soy extract, peanut extract, zein), animal protein (such as fish meal, meat meal, egg white, liver powder (e.g. from chicken liver or poultry liver), collagen, dried insects, such as crickets) or yeast. Preferred protein is milk protein and animal protein, more preferably animal protein, and especially dried insects.

Suitable carbohydrates may be any known sugar, monosaccharide or disaccharide or mixtures thereof, preferably those which are available from natural sources. Examples are saccharose (sucrose), glucose, lactose, fructose, dextrose, maltose. Technical mixtures comprising sugar may also be used, such as granulated sugar, black sugar, brown sugar, honey, molasses. In one embodiment, the sugar is a disaccharide such as saccharose. Other examples include various sugar mixtures with natural polysaccharides and/or proteins such as agar and grape jelly, sucrose and honey syrup, sugar and milk and the like. Additionally, there may be mentioned various sugars such as, for example, sucrose, maltose, arabinose, galactose, sorbitose, dextrose, fructose, sorbitol, corn syrup, maple syrup, molasses, coca-cola syrup, various types of invert sugar (Invertix), molasses honey and the like, and glycerol and the like.

Suitably, lipid materials can be a plant oil such as canola oil, cottonseed oil, peanut oil or soybean oil, for example.

Cellulose materials include wood (pine), paper, (corrugated) cardboard, filter paper, purified cellulose and microcrystalline cellulose.

Examples of specific food attractants or flavorants, in addition to ethyl acetate, acetic acid and ethanol are: citrus pulp, soybean oil, methylamine, dimethylamine, trimethylamine, ethylmethylamine, propylmethylamine, isopropylamine, tert-butylamine, 1-methylpyrrolidine, diethylamine, dimethylacetamide, furfuryl alcohol, 5-methyl-3-heptanone, geranyl butyrate, linalool, 1,3-diethylbenzene, 2-nonanone, (E)-2-hexanoic acid, ammonium acetate, ammonium phosphate, ammonia solution from 10 percent to 30 percent in water, putrescine, cadaverine, trimedlure, a trimedlure isomer, ceralure, 4-[(4-acetyloxy)phenyl]-2-butanone, methyleugenol, a fluorinated methyleugenol analogue, 1,7-dioxaspiro-5,5-undecane and mixtures thereof. Trimedlure and any of its isomeric combinations, Ceralure and any of its isomeric combinations, 4-[(4-acetyloxy)phenyl]-2-butanone, Methyleugenol or fluorinated methyleugenol analogues, and 1,7-dioxaspiro-5,5-undecane, for example.

The bait may include nutritional feeding stimulants as the flavorant (phagostimulants) component which serves to give taste and flavor to the bait composition and/or to enhance feeding by the target insects. Such nutritional feeding stimulants may include, e.g., fatty acids, amino acids, sugars, carbohydrates, pectins, starches, salts, chitins, essential plant oils and the like. For example, among suitable phagostimulants peanut butter oil, apple cider vinegar can be mentioned. Other examples of suitable food flavorants that can be employed in the baits are, for example, extracts from meat, fish or insects. Others which are suitable for attraction are certain natural or synthetic aroma substances such as, for example, meat aromas, fish aromas, seafood aromas, onion aroma, milk aroma, butter aroma, cheese aromas, fruit aromas such as, for example, apple, apricot, banana, blackberry, cherry, currant, gooseberry, grapefruit, raspberry or strawberry (pure, syrup or extract).

The bait compositions of the invention may contain formulation ingredients such as stabilizers, preservatives, inert carriers, excipients, pheromones, kairomones, binders, gelling agents, additives, surfactants etc., as is known to the person skilled in the art.

In one embodiment, by the term "carrier" is meant an organic or inorganic material, which can be natural or synthetic, and which is associated with the isocycloseram active ingredient and which facilitates its application to the locus to be treated. This carrier is thus generally inert and should be acceptable for use on the contemplated or treated locus. The inert carrier can be solid (clay, silicates, silica, limestone, gypsum, ceramics, resins, wax, fertilizers, etc.) or liquid (water, alcohols, ketones, oil solvents, saturated or unsaturated hydrocarbons, chlorinated hydrocarbons, liquified petroleum gas, etc.).

In another embodiment, a food attractant also may serve as a carrier in the bait composition or matrix. For example, citrus pulp may function as both a food attractant and as a carrier in a leaf cutter ant bait matrix; dried cobs of maize corn can be ground after removal of the seeds to form a coarse granular "corn grit" that functions as both a food attractant and a carrier in an Agrotis spp. bait composition or matrix.

Among the many additives, the compositions of the invention can comprise surfactants as well as other ingredients such as dispersants, stickers, antifoam agents, antifreezing agents, dyestuffs, thickeners, adhesives, protective colloids, penetrating agents, stabilizing agents, sequestering agents, antiflocculating agents, corrosion inhibitors, pigments and polymers. More generally, the compositions of the invention can contain all kinds of solid or liquid additives which are known in the art of insecticides and insecticidal treatments.

Surfactants can be of the emulsifying or wetting type, ionic or non-ionic. Possible surfactants are salts of polyacrylic or lignosulfonic acids; salts of phenolsulfonic or naphthalenesulfonic acids; polycondensates of ethylene oxide with fatty alcohols or fatty acids or fatty amines or substituted phenols (particularly alkylphenols or arylphenols); ester-salts of sulfosuccinic acids; taurine derivatives, such as alkyl taurates; phosphoric esters; or esters of alcohols or polyoxyethylated phenols. When the bait composition contains water, the use of at least one surfactant can be desirable.

In one embodiment, the bait composition according to the invention can be in the form of a liquid a paste or a gel or a solid such as a granule, pellet, or powder.

Solid bait compositions can be powders for dusting or for dispersion, pastes, gels and granules, including extruded, agglomerated or compacted granules, or granules which have been made by impregnation of a powder or pulp material. Liquid bait compositions can be compositions which have to be liquid or dispersed in a liquid when applied to a locus including solutions, water-soluble concentrates, emulsifiable concentrates, suspensions, suspension concentrates, suspoemulsions, emulsions, wettable powders, pastes, gels or dispersible granules. Solid bait compositions can also be spreadable granules based on an appropriate insect food attractant as carrier such as a grain (or a ground corn cobs.In one embodiment, an insect bait in accordance with the invention can be associated with various insect bait stations that are known in the art. In a typical insect bait station, a target insect is encouraged to retrieve an appropriate bait composition that contains the isocycloseram.

In one embodiment, when the bait according to the invention is prepared in the form of a gel, it is preferred to select the matrix-forming crosslinkable polymer from among a material from the group comprising carrageenan, alginate, gellan gum, xanthan gum and their mixtures.

Optionally, a polymeric binder can be used for the function of an extrusion aid. Preferred polymeric binders are polyvinylpyrrolidone and polysaccharides. Preferred polysaccharides are cellulose derivatives, preferably cellulose derivatives that are usually prepared by chemical, polymer analogous reactions of cellulose. Preferred cellulose derivatives are cellulose esters, such as cellulose acetate or cellulose butyrate, and cellulose ethers, such as carboxymethyl cellulose, methyl cellulose, methylhydroxyalkyl cellulose, hydroxyethyl cellulose, carboxymethyl hydroxyethy cellulose, ethyl cellulose, ethyl hydroxyethyl cellulose, hydroxypropyl cellulose. More preferred polymeric binder are cellulose ethers, especially methyl cellulose.

In a further embodiment, an insect food attractant also may function as a binder in the bait composition. For example, plant oils such as soybean oil can be used as a binder for bait granules prepared from various grains or pulps such as citrus pulp.

Examples of stabilizers are a calcium salt, such as calcium lactate, calcium chloride and the like. Examples of suitable embittering agents are hot or bitter substances such as for example cayenne pepper powder, denatorium benzoate and the like.

Examples of preservatives are sorbic acid, sorbates, benzoic acid, benzoate, paraoxybenzoic ester, methylisothiazolinone, benzoisothiazolinone, chloromethylisothiazolinone and the like.

In one embodiment, an insect bait composition of the present invention comprises:
a) 0.05 to 5 percent by weight of isocycloseram;
b) 15 to 99.999 percent by weight of an insect food attractant or an insect food flavorant or a mixture thereof;
c) 0 to 10 percent by weight of a gelling agents;
d) 0 to 1 percent by weight of a stabilizer;
e) 0 to 0.1 percent by weight of an embittering agent;
f) 0 to 0.1 percent by weight of a preservative;
g) 0 to 0.5 percent by weight of an excipient; and
h) 0 to 60 percent by weight of an inert (solid or liquid) carrier,
over the total weight of the bait composition.

In one embodiment, the isocycloseram is present in an amount from 0.005 to 5 % by weight of the bait composition: preferably in a rate range of from 0.005%, 0.01%, 0.05%, 0.1%, 0.15% and 0.2% by weight of the bait composition.

Non-limiting examples of the insect pests which may be controlled by a bait according to the present invention include:
from the order Lepidoptera, for example, cutworm caterpillars such as Agrotis spp., Euxoa spp.,
from the order *Diptera,* for example,
Aedes spp., Anopheles spp., Anastrepha spp., Antherigona soccata, Bactrocera spp., Bactrocera oleae, Bibio hortulanus, Bradysia spp., Calliphora erythrocephala, Ceratitis spp., Ceratitis capitata, Chrysomyia spp., Culex spp., Cuterebra spp., Dacus spp., Delia spp, Drosophila melanogaster, Fannia spp., Gastrophilus spp., Geomyza tripunctata, Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis spp, Rivelia quadrifasciata, Scatella spp, Sciara spp., Stomoxys spp., Tabanus spp., Tannia spp. and Tipula spp.;
from the order *Hymenoptera*, for example, (including family: Formicidae)
Acromyrmex spp, Acromyrmex heyeri, Lundii Acromyrmex, Acromyrmex niger, Arge spp., Atta spp., Atta bisphaerica, Atta capiguara, Atta laevigata, Atta sexdens, Atta sexdens rubropilosa, Atta Mexicana, Atta texana, Cephus spp., Diprion spp., Diprionidae, Gilpinia polytoma, Hoplocampa spp., Lasius spp., Monomorium pharaonis, Neodiprion spp., Pogonomyrmex spp, Solenopsis spp. and Vespa spp.; Camponotus spp. (carpenter ant), Tapinoma sessile (odourous house ant), Monomorium minimum, Tetramorium caespitum (pavement ant), Linepithema humile (argentine ant), Monomorium pharaonic (pharaoh ant), Crematogaster spp., Paratrechina longicornis (Latreille), Formica spp., Tapinoma melanocephalum (Fabricus), Dorymyrmex spp., Technomyrmex spp., and Solenopsis geminate.
from the order Isoptera, for example,
Coptotermes spp, Corniternes cumulans, Incisitermes spp, Macrotermes spp, Mastotermes spp, Microtermes spp, Reticulitermes spp.; drywood termites from the family Kalotermitidae
from the order Orthoptera, for example,
Blatta spp. (incl. Oriental and Turkistan), Blattella spp., Gryllotalpa spp., Leucophaea maderae, Locusta spp., Neocurtilla hexadactyla, Periplaneta spp., Scapteriscus spp, and Schistocerca spp.;
*Periplaneta sp* (incl. American and Australian) and *Supella sp.* (brown banded)
from the order Blattodea, for example,
Blattella germanica, Periplaneta americana, Periplaneta australasiae, Blatta orientalis, *Periplaneta fuliginosa*
from the order *Coleoptera*, for example,
Agriotes spp., Amphimallon majale, Anomala orientalis, Anthonomus spp., Aphodius spp, Astylus atromaculatus, Ataenius spp, Atomaria linearis, Chaetocnema tibialis, Cerotoma spp, Conoderus spp, Cosmopolites spp., Cotinis nitida, Curculio spp., Cyclocephala spp, Dermestes spp., Diabrotica spp., Diloboderus abderus, Epilachna spp., Eremnus spp., Heteronychus arator, Hypothenemus hampei, Lagria vilosa, Leptinotarsa decemLineata, Lissorhoptrus spp., Liogenys spp, Maecolaspis spp, Maladera castanea, Megascelis spp, Melighetes aeneus, Melolontha spp., Myochrous armatus, Orycaephilus spp., Otiorhynchus spp., Phyllophaga spp, Phlyctinus spp., Popillia spp., Psylliodes spp., Rhyssomatus aubtilis, Rhizopertha spp., Scarabeidae, Sitophilus spp., Sitotroga spp., Somaticus spp, Sphenophorus spp, Sternechus subsignatus, Tenebrio spp., Tribolium spp.,Trogoderma spp.; Alphitobius spp. (darkling beetle), and Elateridae spp. (wireworm - click beetle).

In a further embodiment, the present invention relates to a method for controlling an insect pest or an insect pest population comprising applying an insecticidally effective amount of an isocycloseram bait composition to a locus or environment of known or likely insect activity.

In one embodiment, the term "locus" or "environment" means the area in which the target insect pest or insect pest population is found, is growing, or is established.

The present invention also relates to termite baits. A termite bait may be a material comprising substantially of cellulose, e.g. paper or card, and isocycloseram. Suitable bait materials are known to the person skilled in the art. Isocycloseram may be applied to the bait after the bait is at the desired location and/or may be applied to the bait during construction, e.g. isocycloseram may be incorporated into the cellulose material.

In a further aspect the invention provides a method for controlling termites and/or termite populations comprising locating an, e.g. cellulose-based, termite bait comprising isocycloseram in a locus where termite control is needed or is expected to be needed. In a further aspect the invention, there is provided an, e.g.cellulose-based, termite bait comprising isocycloseram.

The present invention also relates to cockroach baits. A cockroach bait may be a material comprising a suitable bait material for cockroaches, and isocycloseram. Suitable cockroach bait materials are known to the person skilled in the art. Isocycloseram bait may be applied to an area, locus or environment where cockroach control is needed.

In a further aspect the invention provides a method for controlling cockroaches and/or cockroach populations comprising locating an, e.g. suitable cockroach bait comprising isocycloseram at a locus where such cockroach control is needed or is expected to be needed. In a further aspect the invention provides an, e.g. protein-based, cockroach bait comprising isocycloseram.

In another aspect, there present invention relates to a method of controlling cockroach pests with a bait composition of the invention. In a further embodiment, the bait formulation of the invention is used to control cockroaches by secondary kill, whereby the isocycloseram is translocated in insect-produced residues throughout the cockroach population, especially affecting relatively sedentary early-instar nymphs, so that cockroaches that are not directly exposed to the bait also are controlled.

In one embodiment, cockroaches or cockroach populations are controlled by application of an effective amount of a bait composition comprising the isocycloseram (a.i.) to a locus so that from 0.005 to 0.015 g a.i. per 1 m²; or from 0.015 to 0.02 g a.i per 1 m² is applied to the locus/environment. A locus can include, for example, single and multi-family residential buildings; schools; institutional, commercial, agricultural (including livestock, poultry and companion animal housing) and industrial facilities (including warehouses, apartments, supermarkets, restaurants, motels, hotels, hospitals, daycare facilities, food-handling/storage/processing establishments and zoos); and transportation equipment, such as aircraft, trains, ships, boats, and buses.

In one embodiment, a method of controlling cockroach pests or populations comprises application to an indoor locus of known or suspected cockroach infestation or cockroach harborage sites. Direct applications including as a spot or crack-and-crevice can be made to areas including, but not limited to, pest entry sites, attics, wall voids, behind cabinets or equipment, under counters or under/behind appliances, and along baseboards and reticulation systems. In another embodiment, a method of controlling cockroach pests or populations comprises application to an outdoor locus of known or suspected cockroach infestation or cockroach harborage sites, including application as a spot or crack-and-crevice to exterior structural elements and also outdoor breeding sites, such as refuse collection areas, loading docks, adjacent tree holes, crawl spaces, or other sources of cockroach infestations. The bait composition comprising the isocycloseram can be applied in harborage areas around the structure or where pests are likely to enter or rest, such as utility entry points, weep holes, eaves of structures, around windows or doors, or around lights.

The present invention also relates to ant baits. An ant bait may be a material comprised substantially of a suitable bait material for the target ant, and isocycloseram. Suitable ant bait materials are known to the person skilled in the art. Isocycloseram bait be applied to the environment or locus of known or likely ant foraging or infestation.

In a further aspect the invention provides a method for controlling ants and/or ant populations comprising locating a suitable ant bait comprising isocycloseram where ant control is needed or is expected to be needed. In a further aspect the invention provides an, e.g. carbohydrate containing, ant bait comprising isocycloseram. The locus or environment is similar to that of cockroach insects such as, for example, single and multi-family residential buildings; schools; institutional, commercial, agricultural (including livestock, poultry and companion animal housing) and industrial facilities (including warehouses, apartments, supermarkets, restaurants, motels, hotels, hospitals, daycare facilities, food-handling/storage/processing establishments and zoos); and transportation equipment, such as aircraft, trains, ships, boats, and buses. Application including as a spot or crack-and-crevice can be made to areas including, but not limited to, pest entry sites, attics, wall voids, behind cabinets or equipment, under counters or under/behind appliances, and along baseboards and reticulation systems. In another embodiment, a method of ant pests or populations comprises application to an outdoor locus of known or suspected ant infestation or nesting sites, including application as a spot or crack-and-crevice to exterior structural elements and also outdoor nesting sites. The bait composition comprising the isocycloseram can be applied in nesting areas or ant trails around the structure or where pests are likely to enter or rest, such as utility entry points, weep holes, eaves of structures, around windows or doors, or around lights. In one embodiment, from 0.5 g - 1.5 g of ant bait per 1m²; or 1.5 g - 2.0 g of ant bait per 1m² is applied which has an isocycloseram bait loading of 0.125% to 0.05 % by weight.

In one embodiment, for insect targets such as leaf cutter ants and/or leaf cutter ant populations, a bait is prepared by spraying isocycloseram onto a bait material that comprises a mixture of citrus pulp and soybean oil. The blend may be extruded into a pellet. The bait is used by spreading it manually on the soil surface in the environment or locus of a leaf-cutter ant nest or where a leaf-cutter ant is likely to forage. Such areas include those where citrus, vegetable or eucalyptus plants or trees are growing, for example. Suitable rates include treatments where isocycloseram bait-0.05% at doses of 6, 10 and 12 g/m², isocycloseram bait-0.1% at doses of 6, 10 and 12 g/m², isocycloseram bait -0.2% at doses of 6, 10 and 12 g/m², and isocycloseram bait -0.3% at doses of 6, 10 and 12 g/m². (6 to 12 g g/m² loose earth or anthill, depending on the prevailing conditions).

Alternatively, the baits are made by placing the bait pellets (as described) into a small bag to keep the bait dry which prevents it from deteriorating. The bags are then distributed around the environment or locus of the ants, or the trees to be protected. The ants find the bags and cut through the plastic to access the pellets.

Accordingly, in a further aspect the invention provides a method for controlling leaf cutter ants comprising locating a suitable leaf cutter ant bait comprising isocycloseram where such leaf-cutter ant control is needed or is expected to be needed. In a further aspect the invention provides an, e.g. citrus pulp and soybean oil based, ant bait comprising isocycloseram.

In another embodiment, a cutworm bait is prepared by spraying isocycloseram or a concentrate formulation containing isocycloseram onto a corn grit powder. The bait is used by spreading it manually on to a soil surface in the environment or locus of a cutworm pest or where a cutworm is likely to be found such as where a crop is seeded or is growing. Crops can include, for example, vegetable plants, alfalfa, clover, cotton, rice, sorghum, strawberry, sugarbeet, tobacco, and grains and grass crops including alfalfa, wheat, rice, corn (maize), barley, rye, oats, sorghum, and millet. Accordingly, in a further aspect the invention provides a method for controlling cutworms (Agrotis spp.) comprising locating a suitable cutworm bait comprising isocycloseram where such cutworm control is needed or is expected to be needed. In a further aspect the invention provides a corn grit powder containting bait, e.g. cutworm bait comprising isocycloseram. The cutworm bait is applied to achieve an isocycloseram active ingredient rate of 15g ai/ha, and in other treatments 40 gai/ha; for example from 15 to 60g a.i. /ha or from 15 to 30g a.i. /ha .

In another embodiment, a fruit fly bait is prepared comprising:
Hydrolysed protein 10-40% (sourced from Brewers Spent Grains (BSG)) (Feeding attractant)
Sugars 10-40% (Sourced from Corn Syrup, Sucrose, Honey, Fruit juices, other) (Feeding attractant) Yeast 1-5% (Fly flavourant)
Ammonium acetate 1-5% (Fly flavourant)
Potassium sorbate - 1-5% (Preservative)
Surfactant 1-5% (eg SORBITAN or similar)
isocycloseram 0.1-3% in the form of tech material, DC or SC formulation (insecticide)
Rest Water to 100%

The fruit fly bait can be used by employing 1 litre of formulated product in 10-20 litres of water per hectare and sprayed on 1/3 of the crop surface (such as a citrus crop) as an attract and kill formulation.

In another embodiment, a bait composition according to the invention comprises a pheromone.

In a further embodiment, a bait composition according to the invention comprises a kairomone.

In one embodiment, isocycloseram is present in the bait compositions of the invention in an insecticidally effective amount, of from 0.05 to 5 %, more preferably in an amount from 0.1 to 3 %,
most preferably an amount from 0.3 to 1% by weight of the entire composition.

For application of a bait composition according to the invention to control a target insect pest, the rate of application of isocycloseram (a.i.) will be determined by the pest to be controlled and the locus. In one embodiment, a suitable application rate may be from 1 to 500 mg a.i. /m², preferably from 25 to 200 mg a.i. /m². For example, the rate of application may be at least 1 mg a.i. /m², preferably at least 25mg a.i. /m². For example, the rate of application may be less than 500 mg a.i. /m², preferably less than 200 mg a.i. /m². In another embodiment, the bait is applied to achieve an isocycloseram active ingredient rate of 15g ai/ha, and in other treatments 40 gai/ha; for example from 15 to 60g a.i. /ha or from 15 to 30g a.i. /ha .

More particularly, in one embodiment, for controlling a cockroaches or ants, the bait composition is applied at an isocycloseram rate of from 1 to 20 mg/m². For example, when a bait station containing, e.g., 100g of a bait composition of the invention, the isocycloseram application rate can be 1ga.i./m². For leaf cutter ant, the bait composition is applied to achieve an isocycloseram rate of from 5mg to 40mg/m². More specifically, from 6mg, 10mg, or 12mg per sq meter; from 12, 20 or 24mg per sq meter; or from 18, 30 and 36mg per sq meter.

The invention will now be described by way of non-limiting Examples.

### Examples:

### Examples 1 - 3

### Material & methods

Bait preparation. isocycloseram was applied dissolved in acetone to the appropriate insect diet such that the desired a.i. loading was delivered in the diet after the acetone had evaporated.

| | | | |
|---|---|---|---|
| • | House fly | - | granulated sugar |
| • | Termites | - | filter paper |
| • | Darkling beetle | - | oat flakes |

In a suitable arena, 10 insects of each species were exposed to 1 g of the solid baits. Baits were presented in such a way as to minimise the contact exposure. Three replicates of each treatment and species were conducted.

Insect knockdown was assessed one and three hours after exposure, and mortality after 24 and 48 and 168 hours. Assessments were stopped once/if 100% mortality was observed at both application rates.

### Results

### Example 1

**Table 1. Termite worker knockdown and mortality at time after exposure to filter paper bait**

| *Reticulitermes santonensis* | | | Mean % knockdown or mortality | | | |
|---|---|---|---|---|---|---|
| | | | 1 hour | 3 hours | 24 hours | 48 hours |
| 1 | isocycloseram | 1% | 0 | 7 | 100 | 100 |
| 2 | isocycloseram | 0.10% | 0 | 0 | 100 | 100 |
| 3 | Control | - | 0 | 0 | 0 | 0 |

No significant termite mortality was observed during the first three hours of the study. After 24 hours, 100% termite mortality was recorded at both the 1 and 0.1% w/w application rates of isocycloseram. With no control mortality seen, isocycloseram baits can be considered to have potent activity against termites when applied to a cellulose food-source.

### Example 2

**Table 2. Darkling beetle larval and adult knockdown and mortality at time after exposure to oat flake bait**

| Darkling beetle larvae | | | | | | | |
|---|---|---|---|---|---|---|---|
| | | | Mean % knockdown or mortality | | | | |
| | | | 1 hour | 3 hours | 24 hours | 48 hours | 168 hours |
| 1 | isocycloseram | 1% | 0 | 23 | 80 | 83 | 100 |
| 2 | isocycloseram | 0.1% | 0 | 0 | 0 | 3 | 23 |
| 3 | Control | - | 0 | 0 | 0 | 0 | 7 |
| | | | | | | | |

| Darkling beetle adults | | | | | | | |
|---|---|---|---|---|---|---|---|
| | | | Mean % knockdown or mortality | | | | |
| | | | 1 hour | 3 hours | 24 hours | 48 hours | 168 hours |
| 1 | isocycloseram | 1% | 0 | 0 | 93 | 97 | 100 |
| 2 | isocycloseram | 0.1% | 0 | 0 | 0 | 3 | 7 |
| 3 | Control | - | 0 | 0 | 3 | 0 | 3 |

After careful observation, significant mortality was observed with both adult and larval stages exposed to 100 ppm isocycloseram after 24 hours, with 100% mortality recorded after seven days.

### Example 3

**Table 3. Adult house fly knockdown and mortality at time after exposure to a sugar bait**

| *Musca domestica* | | | Mean % knockdown or mortality | | |
|---|---|---|---|---|---|
| | | | 1 hour | 3 hours | 24 hours |
| 1 | isocycloseram | 1% | 0 | 97 | 100 |
| 2 | isocycloseram | 0.10% | 0 | 57 | 100 |
| 3 | Control | - | 0 | 0 | 0 |

Significant fly knockdown/mortality was observed three hours after initial exposure, especially at the 1% application rate. After 24 hours, 100% mortality was recorded at both 1 and 0.1% isocycloseram in the sugar bait matrix.

### Example 4

### Material & methods

Bait preparation. Blends of citrus pulp and refined soybean oil (95 / 5 w/w %) were sprayed with an aqueous isocycloseram suspension concentrate (SC) such as VIRANTRA^{™} (Syngenta Agro S.A.), further blended and pelletized. Bait pellets or granules having an isocycloseram a.i. loading of 0.05, 0.1, 0.2 and 0.3%, respectively, were prepared.

### Results

The field test for the control *of Atta bisphaerica* (leaf cutter ant) was conducted with the pelleted isocycloseram citrus pulp bait. The experimental design was completely randomized, with fourteen treatments and 10 replications, following the norms, considering an anthill as repetition. The treatments used were: isocyloseram-0.05% at doses of 6, 10 and 12 g/m², isocyloseram -0.1% at doses of 6, 10 and 12 g/m², isocycloseram -0.2% at doses of 6, 10 and 12 g/m², isocycloseram -0.3% at doses of 6, 10 and 12 g/m², A commercial standard Mirex-S (sulfluramid) at a dose of 10 g/m² and a control (Placebo); commercial product dosages per m² of loose earth. The evaluations with 1, 2, 3 and 7 DAA (days after application) included the loading rate parameters (%) (i.e. the % bait applied that is carried into the ant nest), return rate (%) (i.e. the % bait rejected by the colony) and intoxicated ants. As 1, 2, 3, 7, 15, 28, 60, 90, 118 and 155 DAA, the ground removal parameters (%) and leaf cutting and anthill excavation at 155 DAA.

The application of the products was carried out manually, with the aid of a dosing cup, near the scouts and trails of the anthills. The results obtained were submitted to variance analysis, compared by the Scott-Knott test (p≤0.05) and corrected by the modified Abbott formula for control calculation.

The results showed that the isocycloseram treatments had an average loading rate of 97.03% and a return rate of less than 7% (sulfluramid treatments had a return rate of around 10 to 15%), regardless of the dosage and concentration of active ingredient.

The response rate as a function of the time of intoxication of isocycloseram-based baits is 87.5% in the first three days after the application of bait, reaching its totality of 100% at seven days after bait application. The isocycloseram treatments showed that at seven days after treatment there is a paralization by the ants in this activity and that at twenty-eight days this average removal is less than 5%. At ninety days after application, the concentrations of isocycloseram - 0.1% (12g), isocycloseram - 0.2% (6, 10 and 12g) and isocycloseram - 0.3% (6, 10 and 12g) ceased activity in 100% in leaf cutting by ants, similar to Mirex-s treatment - 0.3%. The control efficiency after opening the nests in the excavation of the anthills showed that the treatments isocycloseram - 0.2% (10 and 12 g) and 0.3% (6, 10 and 12 g) have control higher than 84%, being higher than the Mirex-S standard.

### Example 5

### Materials and Methods

Isocycloseram was incorporated into the peanut-butter base by mixing 0.5 ml of a 10000 ppm (1%) solution of the compound in acetone into 0.5g of peanut butter. The mixture was left in a fume cupboard for 24 hours to allow the acetone to evaporate, leaving 0.5 mg of compound in 0.5 g of peanut butter, equivalent to 10000 ppm.

Five adult male and five non-gravid adult female German cockroaches, Blattella germanica, were marked with a dot of white paint, to identify them, and placed into a plastic arena approximately 20cm in diameter. Also placed in each arena was a simple harbourage constructed from concertinaed card and a water source. After the cockroaches had acclimatised for 24 hours a 15ml glass vial containing 0.5g of the treated peanut butter bait was added.

After 48 hours the glass vial containing the bait was removed, and an assessment of the cockroach mortality was made. Five adult male and five non-gravid adult female German cockroaches, *Blattella germanica*, were added to the arena, leaving any dead or alive cockroaches with the white paint mark in the arena.

Mortality of both the marked and unmarked cockroaches was made after 24 and 96 hours.

### Results summary

**Table 4. Mean percentage cockroach mortality, 'donor' 48 hour mortality and 'recipient' mortality 24 and 48 hours post introduction to donors**

| | Donor % mortality | Recipient %mortality | |
|---|---|---|---|
| Treatment | 48 hours | 24 hours | 96 hours |
| isocycloseram 1% | 100 | 97 | 100 |
| Control | 0 | 0 | 0 |

### Discussion

The 'donor' cockroaches were dead 48 hours after introduction of the 1% isocycloseram bait. No mortality was observed among the cockroaches provided with a blank peanut butter only 'bait'.

97% of the 'recipient' cockroaches, that were exposed to the dead donor cockroaches, plus any frass, etc., that they may have produced, but not the isocycloseram bait, were dead 24 hours after introduction. After four days, 100% of the recipient cockroaches were dead.

No mortality was recorded among donor or recipient cockroaches in the control, peanut butter only bait 96 hours after the introduction of the recipients.

Accordingly, there is clear evidence of secondary kill of cockroaches not directly exposed to the isocycloseram bait, through contact with cockroaches that have directly accessed the bait.

Example 6, Control of *Agrotis ypsilon* (Greasy cutworm) as a corn grit bait on soil in corn

### Material & methods

### Methodology:

Trial layout: Arenas of 4 square metres were created in a field with 20cm high plastic walls to prevent escape of larvae and influx of predators but left to the open air. 3 replicates per trearment were set up. Corn (variety Hightech 2031, conventional non-Bt) was planted at the rate of 30 seeds per arena.

Application method 1: For seed treatment, the seeds were treated with aqueous 40% isocycloseram formulation, such as VIRANTRA^{™} (Syngenta Agro S.A.), one day before planting using a standard seed treatment water slurry volume of 50 ml/kg of seed. Four rates of isocycloseram seed treatment were tested 0.3, 0.6, 1.3 and 2.5 mg/seed.

Application method 2: For bait application, dried cobs of maize corn were ground after removal of the seeds to form a coarse granular "corn grit" bait carrier. The corn grit was spread out on a plastic sheet and sprayed with a 40% SC aqueous formulation of isocycloseram mixed with water at the rates of 15, 30 and 60 grams of isocycloseram per 70 kg of corn grit. The baits were then mixed homogeneously and spread by hand in the evening at a rate of 70 kg/ha (7 gr./sqm, or 28 gr./plot) evenly over the soil surface. This was done 4 days after planting, just before emergence of the corn to attract and kill the cutworms at night.

Application method 3: For foliar sprays, a standard hand-held spray-boom with flat-fan nozzles at 600 I/ha was used. The spray was made 1 day after release of the Greasy cutworm larvae at the 2 leaf stage (BBCH 12) of the corn. Three rates were used 30, 60 and 90 grams isocycloseram per hectare

Standard products used include Spinetoram SC120 at 18gai/ha and Lambdacyhalothrin EC050 at 22.4 gai/ha as foliar treatments, and Hostathion (triazophos) EC400 at 1200 gai/ha as a bait treatment, using the same methods as outlined above for isocycloseram. Two check lots were included - both untreated, one with infestation and one without infestation.

Artificial infestation: Laboratory-reared *Agrotis ypsilon* (Greasy cutworm) larvae at the L5 stage were released into the arenas at a rate of 30 larvae per arena (1 larva per plant) in the morning. This infestation was made Infest 30 L5 larvae into each arena in the morning (1 larva per plant) approx 3 days after seeding just as corn is germinating. Make the application 8-24 hours later.

Assessment: The number of damaged plants per plot was measured at 21 days after the last application (the foliar spray).

Results: No phytotoxicity or adverse crop growth was recorded in any of the treatments.

The plant damage in the infested check at 22 Days after release of larvae was 98.3%.

The plant damage in the uninfested check was 0%, indicating good function of the arena walls.

The corn grit bait treatments with isocycloseram showed significantly higher reduction of corn damage by Greasy cutoworm at lower rates per hectare than the foliar sprays and the seed treatments with the same compound demonstrating the benefit of the bait formulation on this pest. The dose rate needed to control the pest in a bait was approximately 100 times lower than the commercial standard hostathion (triazophos).

**Table 5. Protection of corn seedlings from Agrotis ypsilon larvae expressed as percentage reduction of damaned plants per plot measured at 21 days after the foliar spray and 22 days after release of the larvae into the arenas. (note treatments 1-14 were all infested with cutworms). Hostathion, spinetoram and lambda-cyhalothrin are comparative products for reference and not according to the invention.**

| Trtmt | compound | Method | Dose rate and units | Equivalent rate gai/ha | % reduction of corn damage 22d after infestation |
|---|---|---|---|---|---|
| 1 | isocycloseram | Corn grit Bait | 0.21 gai/kg bait | 15 | 87% |
| 2 | isocycloseram | Corn Grit Bait | 0.42 gai/kg bait | 30 | 94% |
| 3 | isocycloseram | Corn Grit Bait | 0.63 gai/kg bait | 60 | 94% |
| 4 | hostathion | Corn Grit Bait | 17.14 gai/kg bait | 1200 | 89% |
| 5 | isocycloseram | Foliar spray | 30 gai/ha | 30 | 37% |
| 6 | isocycloseram | Foliar spray | 60 gai/ha | 60 | 46% |
| 7 | isocycloseram | Foliar spray | 90 gai/ha | 90 | 74% |
| 8 | Spinetoram | Foliar spray | 18 gai/ha | 18 | 28% |
| 9 | lambdacyhalothrin | Foliar spray | 22.4 gai/ha | 22.4 | 81% |
| 10 | isocycloseram | Seed treatment | 0.3 mg ai/seed | 18 | 0% |
| 11 | isocycloseram | Seed treatment | 0.6 mg ai/seed | 36 | 2% |
| 12 | isocycloseram | Seed treatment | 1.3 mg ai/seed | 72 | 6% |
| 13 | isoccyloseram | Seed treatment | 2.5 mg ai/seed | 144 | 13% |
| 14 | Untreated infested | | | | 98.3% damage |
| 15 | Untreated uninfested | | | | 0% damage |

## Claims

1. A bait composition comprising an insecticidally effective amount of isocycloseram and a bait material comprising an insect food attractant comprising one or more of a grain, a protein, a vegetable, a plant extract, a carbohydrate, a lipid, or a cellulose material; wherein the isocycloseram is present in an amount of from 0.05 to 5 % by weight of the bait composition.

2. A bait composition according to claim 1, wherein the composition is in the form of a gel, paste or powder.

3. A bait composition according to claim 1, wherein the composition is a solid.

4. A bait composition according to claim 1, wherein the composition is a liquid.

5. A bait composition according to claim 1, wherein the lipid comprises canola oil, cottonseed oil, peanut oil or soybean oil.

6. A bait composition according to claim 1, wherein the grain comprises oat flakes or distiller's grain.

7. A bait composition according to claim 1, wherein the protein comprises peanut butter, commercial corn mash liquor, yeast lysates or soy protein hydrolysate.

8. A bait composition according to claim 1, wherein the carbohydrate comprises granulated sugar, an invert sugar, glucose, fructose, sucrose, a fructose enriched sucrose hydrolyzate, maltose, lactose, a sucrose solution, orange juice, trehalose, honey, cane syrup or molasses.

9. A bait composition according to claim 1, wherein the bait material comprises a mixture of citrus pulp and soybean oil.

10. A bait composition according to any one of the previous claims, which further comprises a phagostimulant.

11. A bait composition according to any one of the previous claims, which further comprises a pheromone or a kairomone.

12. A bait composition according to any one of the previous claims, which further comprises an embittering agent.

13. A non-therapeutic method for controlling an insect pest population comprising applying an insecticidally effective amount of a bait composition according to any one of claims 1 - 12 to an environment or locus containing the insect or insect population to be controlled.

14. The method of claim 13, wherein said insect pest is a crawling insect pest selected from ants, termites, cockroaches or darkling beetles.

15. The method of claim 13, wherein said insect is a flying insect pest selected from dipteran flies, mosquitoes and tephritidae flies.

16. The method of claim 14, wherein said ant is a leaf cutter ant.

17. The method of claim 14, wherein said cockroach pest is controlled by secondary kill, whereby the isocycloseram is translocated in insect-produced residues throughout the cockroach population.

18. The method of claim 13, wherein said insect pest is an Agrotis spp. or cutworm.

## Patentansprüche

1. Köderzusammensetzung, umfassend eine insektizid wirksame Menge an Isocycloseram und ein Ködermaterial, das ein ein Getreide, ein Protein, ein Gemüse, einen Pflanzenextrakt, ein Kohlenhydrat, ein Lipid und/oder ein Cellulosematerial umfassendes Insektennahrungslockmittel umfasst, wobei das Isocycloseram in einer Menge von 0,05 bis 5 Gew.-% der Köderzusammensetzung vorliegt.

2. Köderzusammensetzung nach Anspruch 1, wobei die Zusammensetzung in Form eines Gels, einer Paste oder eines Pulvers vorliegt.

3. Köderzusammensetzung nach Anspruch 1, wobei die Zusammensetzung ein Feststoff ist.

4. Köderzusammensetzung nach Anspruch 1, wobei die Zusammensetzung eine Flüssigkeit ist.

5. Köderzusammensetzung nach Anspruch 1, wobei das Lipid Rapsöl, Baumwollsamenöl, Erdnussöl oder Sojaöl umfasst.

6. Köderzusammensetzung nach Anspruch 1, wobei das Korn Haferflocken oder Trockenschlempe (Distiller's Grain) umfasst.

7. Köderzusammensetzung nach Anspruch 1, wobei das Protein Erdnussbutter, handelsübliche Maismaische, Hefelysate oder Sojaproteinhydrolysat umfasst.

8. Köderzusammensetzung nach Anspruch 1, wobei das Kohlenhydrat granulierten Zucker, einen Invertzucker, Glucose, Fructose, Saccharose, ein fructoseangereichertes Saccharosehydrolysat, Maltose, Lactose, eine Saccharoselösung, Orangensaft, Trehalose, Honig, Zuckerrohr oder Melasse umfasst.

9. Köderzusammensetzung nach Anspruch 1, wobei das Ködermaterial eine Mischung aus Zitruspulpe und Sojaöl umfasst.

10. Köderzusammensetzung nach einem der vorhergehenden Ansprüche, die weiterhin einen Appetitanreger umfasst.

11. Köderzusammensetzung nach einem der vorhergehenden Ansprüche, die weiterhin ein Pheromon oder ein Kairomon umfasst.

12. Köderzusammensetzung nach einem der vorhergehenden Ansprüche, die weiterhin ein Bittermittel umfasst.

13. Nicht-therapeutisches Verfahren zur Bekämpfung einer Insektenschädlingspopulation, umfassend das Ausbringen einer insektizid wirksamen Menge einer Köderzusammensetzung nach einem der Ansprüche 1 - 12 auf eine Umgebung oder einen Ort, die bzw. der das zu bekämpfende Insekt bzw. die zu bekämpfende Insektenpopulation enthält.

14. Verfahren nach Anspruch 13, wobei der Insektenschädling ein aus Ameisen, Termiten, Schaben oder Schwarzkäfern ausgewählter kriechender Insektenschädling ist.

15. Verfahren nach Anspruch 13, wobei das Insekt ein aus Zweiflügler-Fliegen, Mücken und Bohrfliegen ausgewählt ist fliegender Insektenschädling ist, der.

16. Verfahren nach Anspruch 14, wobei es sich bei der Ameise um eine Blattschneiderameise handelt.

17. Verfahren nach Anspruch 14, wobei die Schadschabe durch sekundäre Abtötung bekämpft wird, wobei das Isocycloseram in von Insekten produzierten Rückständen innerhalb der gesamten Schabenpopulation verteilt wird.

18. Verfahren nach Anspruch 13, wobei es sich bei dem Schadinsekt um eine Agrotis spp. bzw. Erdraupe handelt.

## Revendications

1. Composition d'appât comprenant une quantité efficace sur le plan insecticide d'isocycloséram et une matière appât comprenant un agent attractif alimentaire pour insectes comprenant un ou plusieurs parmi une céréale, une protéine, un légume, un extrait végétal, un glucide, un lipide ou une matière cellulosique ; dans laquelle l'isocycloséram est présent en une quantité de 0,05 à 5 % en poids de la composition d'appât.

2. Composition d'appât selon la revendication 1, dans laquelle la composition est sous la forme d'un gel, d'une pâte ou d'une poudre.

3. Composition d'appât selon la revendication 1, dans laquelle la composition est un solide.

4. Composition d'appât selon la revendication 1, dans laquelle la composition est un liquide.

5. Composition d'appât selon la revendication 1, dans laquelle le lipide comprend de l'huile de canola, de l'huile de coton, de l'huile d'arachide ou de l'huile de soja.

6. Composition d'appât selon la revendication 1, dans laquelle la céréale comprend des flocons d'avoine ou des drêches de distillerie.

7. Composition d'appât selon la revendication 1, dans laquelle la protéine comprend du beurre d'arachide, de la liqueur commerciale de bouillie de maïs, des lysats de levure ou un hydrolysat de protéines de soja.

8. Composition d'appât selon la revendication 1, dans laquelle le glucide comprend du sucre granulé, un sucre inverti, du glucose, du fructose, du saccharose, un hydrolysat de saccharose enrichi en fructose, du maltose, du lactose, une solution de saccharose, du jus d'orange, du tréhalose, du miel, du sirop de canne ou de la mélasse.

9. Composition d'appât selon la revendication 1, dans laquelle la matière d'appât comprend un mélange de pulpe d'agrumes et d'huile de soja.

10. Composition d'appât selon l'une quelconque des revendications précédentes, qui comprend en outre un phagostimulant.

11. Composition d'appât selon l'une quelconque des revendications précédentes, qui comprend en outre une phéromone ou une kairomone.

12. Composition d'appât selon l'une quelconque des revendications précédentes, qui comprend en outre un agent amer.

13. Procédé non thérapeutique de régulation d'une population d'organismes nuisibles de type insectes comprenant l'application d'une quantité efficace sur le plan insecticide d'une composition d'appât selon l'une quelconque des revendications 1 à 12 sur un environnement ou lieu contenant l'insecte ou la population d'insectes à réguler.

14. Procédé selon la revendication 13, dans lequel ledit organisme nuisible de type insecte est un organisme nuisible de type insecte rampant choisi parmi les fourmis, les termites, les blattes ou les ténébrions.

15. Procédé selon la revendication 13, dans lequel ledit insecte est un organisme nuisible de type insecte volant choisi parmi les mouches diptères, les moustiques et les mouches tephritidae.

16. Procédé selon la revendication 14, dans lequel ladite fourmi est une fourmi coupe-feuille.

17. Procédé selon la revendication 14, dans lequel ledit organisme nuisible de type blatte est régulé par une destruction secondaire, moyennant quoi l'isocycloséram est transloqué dans des résidus produits par des insectes dans toute la population de blattes.

18. Procédé selon la revendication 13, dans lequel ledit organisme nuisible de type insecte est un Agrotis spp. ou ver gris.
